# EUROPÄISCHE PATENTANMELDUNG

(11) **EP 1 185 117 A1**
(43) Veröffentlichungstag der Anmeldung: **06.03.2002**
(21) Anmeldenummer: 01120991.3
(22) Anmeldetag: 31.08.2001
(51) Int. Cl.: H04Q 3/62

(54) **Verfahren zur Übertragung von Nachrichtendaten innerhalb eines Telefonsystems**

(30) Priorität: 04.09.2000 DE 10043487
(71) Anmelder: Tenovis GmbH & Co. KG, 60326 Frankfurt am Main (DE)
(72) Erfinder: Fouladi, Farhad, 60431 Frankfurt (DE)
(74) Vertreter: Bohnenberger, Johannes, Dr.

(57) **Zusammenfassung**

In einem Verfahren zur Übertragung von Nachrichtendaten innerhalb eines Telefonsystems zwischen einer Telefonanlage (1) und mindestens einem Endgerät (2) und/oder mindestens einer Einrichtung (20) zur Administration der Telefonanlage (1) werden Nachrichtendaten mittels eines Übertragungsprotokolls übertragen, wobei als Übertragungsprotokoll ein Kommunikationssteuerungs-Protokoll in Form eines Hypertext-Transport-Protokolls (HTTP) verwendet wird, welches die Nachrichtendaten mittels eines Darstellungsprotokolls in Form von einem Extensible Markup Language(XML)-Dokument (4) überträgt.

## Beschreibung

Die Erfindung betrifft ein Verfahren zur Übertragung von Nachrichtendaten innerhalb eines Telefonsystems nach dem Oberbegriff des Patentanspruches 1 sowie ein entsprechendes Telefonsystem.

Bekannterweise wird in der Telekommunikation die Steuerung des Auf- und Abbaus von Datenverbindungen in Datennetzen mit speziellen Steuersignalen (Signalisierung), welche zwischen beispielsweise Endgeräten und dem Netz ausgetauscht werden, durchgeführt. Beschrieben werden diese Vorgänge durch die Signalisierungsprotokolle. Die Datenkommunikation ist dabei verbindungsorientiert, d. h., es muß ein Verbindungsaufbau vor dem eigentlichen Datenaustausch erfolgen. Somit muß, bevor eine Meldung von der Telefonanlage an das Endgerät gesendet wird, zunächst eine Verbindung zwischen diesen beiden Einrichtungen hergestellt werden. Dies trifft auch für den Verbindungsaufbau zwischen der Telefonanlage und einem Administrationstool bzw. einer Einrichtung zur Administration der Telefonanlage zu, welches dafür sorgt, daß nur bestimmte Benutzer in externe Netze telefonieren dürfen, die anzeigt, welchen Namen die Benutzer haben, oder deren Telefonnummer anzeigt. Eine derartige vor der eigentlichen Datenübertragung aufzubauende Verbindung erfordert zusätzliche Einrichtungen zu deren Auf- und Abbau.

Heutzutage werden Nachrichten als Informationen in Telefonsystemen durch binäre Meldungen zwischen Sender und Empfänger übertragen. Solche Nachrichten werden insbesondere dafür verwendet, Nummern und Namen von Nutzern des Telefonsystems darzustellen oder zu unterdrücken oder eine Verbindung aufzubauen oder zu beenden. Die binären Meldungen und damit die zu übertragenden Nachrichten werden bisher im Binärformat redundant versendet. Ein Nachteil des Übertragens von Meldungen im Binärformat liegt darin, daß die Meldungen vor dem Versenden ins binäre Format kodiert und von einem Empfänger wieder dekodiert werden müssen.

Bekanntermaßen kann ein Code im Binärformat beispielsweise aus den zwei Zeichen 0 und 1 bestehen, die in ihrer Abfolge, beispielsweise "01010010010111100...", einen Binärcode darstellen. Dieser Binärcode ermöglicht es, aus den zwei Zeichen 0 und 1 unterschiedliche Originalzeichen zu kodieren, um sie über eine Datenleitung zu übertragen. Allerdings erfordert die Kodierung am Sender und die Dekodierung der gesendeten Meldung am Empfänger eine Übersetzungseinrichtung, die heutzutage einen wichtigen und meist komplexen Anteil der Telefonsysteme darstellt. Entweder werden derartige Übersetzungseinrichtungen von den Konstrukteuren der Telefonsysteme teuer eingekauft oder sie werden aufwendig und zeitraubend selbst entwickelt.

Zudem sind solche binär kodierten Meldungen nicht nur vom Menschen nicht direkt lesbar, wodurch das Testen dieses Binärcodes erschwert wird, sondern erfordern auch eine Übersetzungseinrichtung, die aufgrund ihrer Komplexität im Soft- und Hardwarebereich fehleranfällig ist.

Der Erfindung liegt die Aufgabe zugrunde, ein Verfahren zur Übertragung von Nachrichtendaten innerhalb eines Telefonsystems dahingehend weiterzubilden, daß Nachrichtendaten in einfacher, kostengünstiger und schneller Weise übertragen werden können, sowie eine Vorrichtung zur Durchführung des Verfahrens aufzuzeigen.

Diese Aufgabe wird durch ein Verfahren nach Patentanspruch 1 bzw. durch ein Telefonsystem nach Patentanspruch 11 gelöst.

Insbesondere wird die Aufgabe durch ein Verfahren und eine Vorrichtung gelöst, bei denen zur Übertragung von Nachrichtendaten innerhalb eines Telefonsystems zwischen einer Telefonanlage und mindestens einem Endgerät und/oder mindestens einer Einrichtung zur Administration der Telefonanlage ein Übertragungsprotokoll verwendet wird, welches als ein Kommunikationssteuerungs-Protokoll in Form eines Hypertext-Transport-Protokolls (HTTP) aufgebaut ist und die Nachrichtendaten mittels eines Darstellungsprotokolls in Form von einem Extensible Markup Language(XML)-Dokument überträgt.

Ein wesentlicher Punkt der Erfindung liegt darin, daß die Nachrichtendaten in Form eines XML-Dokuments auf der HTTP-Ebene übertragen werden. Dadurch wird erreicht, daß eine Übertragung der Nachrichtendaten im Binärformat und damit eine Übersetzung der Nachrichtendaten nicht mehr notwendig ist, da die Übertragung auf HTTP-Ebene als zeichenorientierte Dateien, beispielsweise im ASCII-Format, stattfindet.

Bedingt durch die Verwendung derartiger Kommunikationssteuerungs- und Darstellungsprotokolle zur Übertragung der Nachrichtendaten innerhalb eines Telefonsystems wird ermöglicht, daß zur Verbindung der Telefonanlage mit den Endgeräten (Terminals) bzw. der Einrichtung zur Administration der Telefonanlage Datenkommunikationsverbindungen wie beispielsweise ein lokales Netz (Local Area Network = LAN) verwendet werden können, die zur Datenübermittlung mit hoher Geschwindigkeit und verbindungsloser Kommunikation dienen. Die verbindungslose Kommunikation, d. h., daß es keinen Verbindungsaufbau vor einem Datenaustausch und kein Verbindungsabbau nach einem Datenaustausch gibt, ermöglicht ein kostengünstiges und vereinfachtes Verfahren zur Übertragung von Nachrichtendaten aufgrund der sich somit erübrigenden Verbindungsaufbaueinrichtungen. Der Wegfall der Schritte des Verbindungsauf- und -abbaus ermöglicht die Übertragung von Nachrichtendaten innerhalb kürzester Zeit.

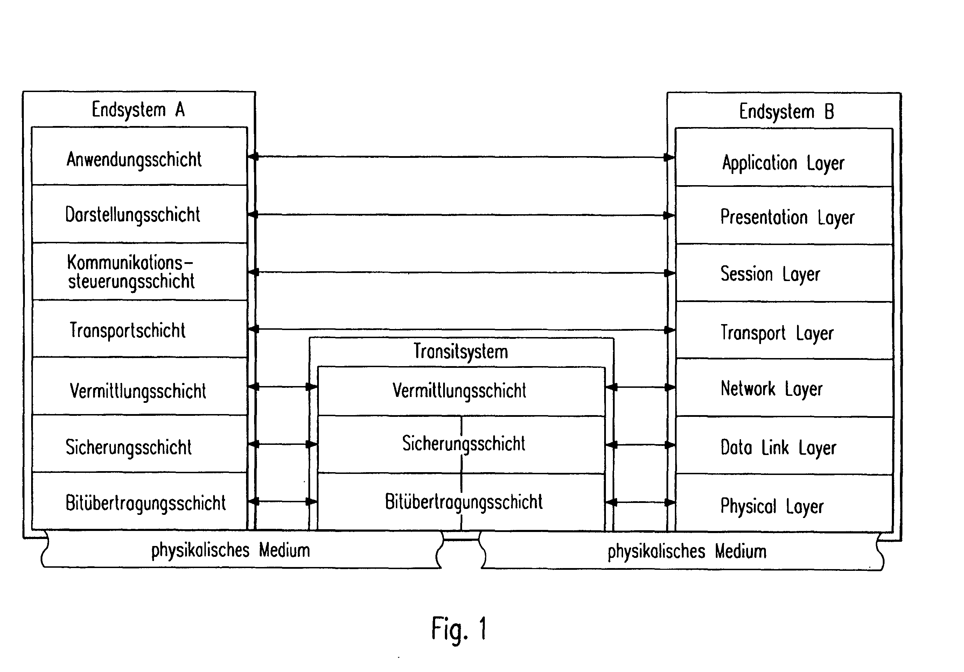

Nach dem OSI-Referenzmodell, welches die Protokollschichtung für den Kommunikationsverbund offener und verteilter Systeme funktionell beschreibt, ist neben einer Kommunikationssteuerungs- und einer Darstellungsschicht auch eine Transportschicht sowie eine Vermittlungsschicht zur Übertragung von Daten zwischen zwei Endsystemen erforderlich. Die dafür zuständigen Transport- und Vermittlungsprotokolle können als ein Transmission-Control-Protokoll (TCP) und ein Internet-Protokoll (IP) ausgebildet sein. Diese Protokolle dienen zum einen zum Errichten, Steuern und Beenden der Transportverbindung von Nachrichtendaten und zum anderen zum Aufbauen der Netzverbindung zwischen den Endsystemen, also der Telefonanlage und dem/den Endgerät(en) und/oder der Einrichtung zur Administration der Telefonanlage. Durch das Bereitstellen ihrer Dienste für das nächst höher angeordnete Protokoll, bzw. dessen zugeordnete Schicht, wie es beispielsweise in Fig. 1 dargestellt wird, ist eine reibungslose, schnelle und Binärformat-kodierungslose Übertragung der Nachrichtendaten möglich.

Die in Form eines XML-Dokuments übertragenen Nachrichtendaten können mittels Dokumententyp-Definitionen (DTD) in gewisse Regeln für das Dokument dieses Typs gefaßt werden. Dadurch ist es sowohl für den Benutzer eines Endgerätes als auch für den Administrator des Telefonsystems möglich, den Aufbau von Seiten in einem Endgerät flexibler zu gestalten. Der Benutzer bzw. Administrator kann also die übertragenen oder zu übertragenden Nachrichtendaten abhängig vom Teilnehmerkreis und dem Zeitabschnitt anfordern, auswählen und in gewissen Grenzen flexibel darstellen. Die Nachrichtendaten können Namen, Telefonnummern und dergleichen Angaben zur Person des/der Benutzer/s darstellen.

Alternativ zu einem LAN-Netz kann auch ein ISDN-Netz oder ein ATM-Netz mit den für diese Netze jeweils typischen Vorteilen zur Verbindung der Einrichtungen innerhalb des Telefonsystems verwendet werden.

Ein Endgerät und die mindestens eine Einrichtung zur Administration der Telefonanlage können vorteilhafterweise als eine gemeinsame Einrichtung ausgebildet sein, wodurch für den Benutzer der Umgang mit dem XML-Dokument vereinfacht wird.

Indem eine Schnittstelle zwischen einem Endgerät und Anwendungsprogrammen mittels Computer-Telefon-Integration (CTI) geschaffen wird, ist vorteilhafterweise das Initiieren eines Anrufs zwischen zwei weiteren mit der Telefonanlage verbundenen Endgeräten möglich. Dadurch kann der Benutzer eines Endgerätes auf einfache und schnelle Weise eine Dreierkonferenz oder ein Gespräch zwischen den zwei weiteren Endgeräten ohne seine eigene Teilnahme initiieren.

Vorteile und Zweckmäßigkeiten der Erfindung ergeben sich aus den Unteransprüchen sowie der nachfolgenden Beschreibung bevorzugter Ausführungsbeispiele, die anhand der Abbildungen näher erläutert werden. Hierbei zeigen:
- Fig. 1: eine Darstellung des OSI-Referenzmodells als hierarchische Schichtstruktur;
- Fig. 2: eine erste Ausführungsform der Erfindung;
- Fig. 3: eine zweite Ausführungsform der Erfindung;
- Fig. 4: eine dritte Ausführungsform der Erfindung und
- Fig. 5: eine vierte Ausführungsform der Erfindung.

In der nachfolgenden Beschreibung werden für gleiche und gleich wirkende Teile dieselben Bezugsziffern verwendet.

Das in der Figur 1 gezeigte OSI(Open Systems Interconnection)-Referenzmodell stellt ein Architekturmodell für die Realisierung eines sogenannten offenen Systems dar - d. h. für Komponenten verschiedener Hersteller bzw. Netzwerkbetreiber. Ein solches offenes Kommunikationssystem erlaubt also die Kommunikation zwischen beliebigen Nutzern, ohne daß die Partner bezüglich der Datenend- und Datenübertragungseinrichtungen an einen bestimmten Hersteller oder eine bestimmte Architektur gebunden sind. Dabei sind die Endsysteme für die ordnungsgemäße Abwicklung der Funktionen innerhalb der Kommunikation selbst verantwortlich. Das Referenzmodell gliedert sich in sieben hierarchisch gegliederte sogenannte Schichten (Ebenen, Layers), von denen jede genau festgelegte Funktionen aufweist.

Die Funktion der Vermittlungsschicht ist beispielsweise die Wegefindung, d. h. die Suche nach dem günstigsten Weg vom Endsystem A zu dem Endsystem B, wobei im allgemeinen mehrere Wege möglich sind. Ausgehend von einer Zieladresse muß eine Verbindung über mehrere Teilstrecken und/oder Zwischensysteme zum Ziel aufgebaut werden.

Bei der Transportschicht handelt es sich um eine Schicht, die für den Aufbau, die Verwaltung und den Abbau logischer Verbindungen zwischen dem Endsystem A und dem Endsystem B zuständig ist. Sie ähnelt einer Ende-Zu-Ende-Kontrollverbindung, die den Dialog zwischen zwei Endsystemen steuert.

Die Kommunikationssteuerungsschicht unterstützt die verschiedenen Anwendungsdialoge der Nutzer an den Endsystemen. Dazu müssen die einzelnen Dialog-Einheiten synchronisiert, organisatorische Aufgaben zur Steuerung der Dialoge übernommen sowie der Auf- und Abbau von Verbindungen geregelt werden. Somit ist eine Funktion der Kommunikationssteuersschicht das Multiplexen mehrerer Aufträge innerhalb eines Systems sowie die eigentliche Datenübertragung vom Endsystem A zu dem Endsystem B oder umgekehrt.

Bei der Darstellungsschicht steht die Anwendung im Mittelpunkt. Die Funktion der Darstellungsschicht ist im wesentlichen die Festlegung, in welcher gemeinsamen Sprache Informationen bzw. Daten zwischen den beiden Endsystemen übertragen werden. Dabei ist zu berücksichtigen, daß Rechner teilweise unterschiedliche Codes bzw. Darstellungen verwenden, wie z. B. ASCII oder EPCDIC.

Die Bitübertragungsschicht (Physical Layer), welche die unterste und somit hardware-naheste Schicht des OSI-Referenzmodells darstellt, ermöglicht den Anschluß an vorhandene physikalische Verbindungen, wie beispielsweise ein LAN, ISDN-Netzwerk oder ATM(Asynchrones Transfer Modus)-Netzwerk.

Die oben beschriebenen Funktionen bzw. Dienste einer jeden Schicht werden an die jeweils nächsthöhere Schicht weitergereicht, stehen also in der obersten Schicht (Anwendungsschicht) über den Anwendungsprozeß den Benutzern der Endsysteme zur Verfügung. Innerhalb einer Schicht ist die Kommunikation zwischen dem Endsystem A und dem Endsystem B durch die Protokolle der betreffenden Schicht geregelt. Diese Protokolle legen Verfahren über den Austausch von Nachrichtendaten zwischen den Endsystemen fest, wobei diese aus einer Reihe von Regeln und Formaten bestehen. Das Protokoll beinhaltet einerseits die Beschreibung von Schnittstellen, Datenformaten, Zeitabläufen und Fehlerkorrekturen, andererseits die Betriebsvorschriften, nach denen die Datenübertragung - in einem speziellen Abschnitt - erfolgt (z. B. Code, Übertragungsrichtung, Übertragungsformat ...).

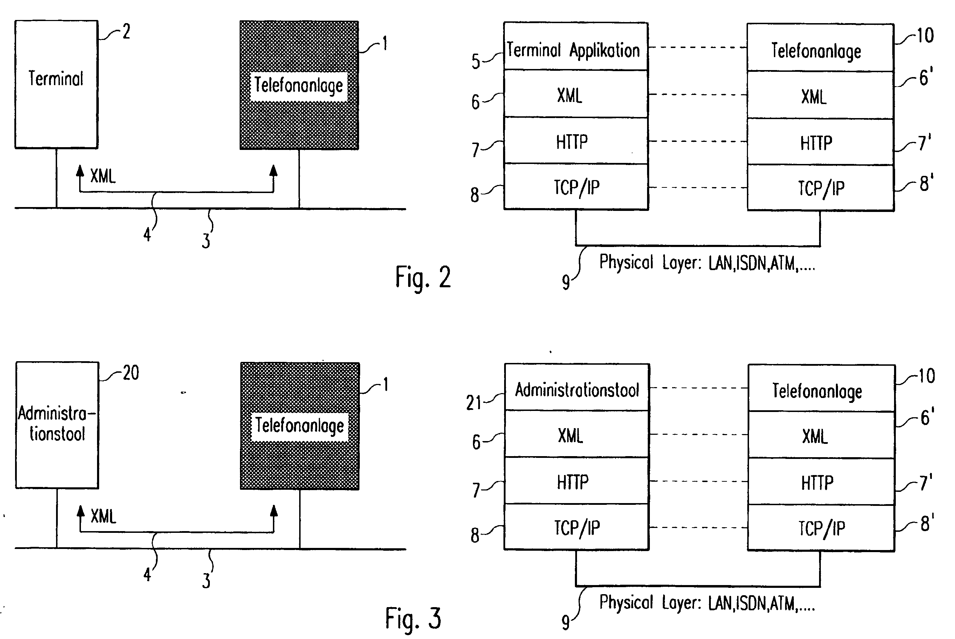

Die in Fig. 2 dargestellte erste Ausführungsform der Erfindung wird nun anhand der Kombination eines erfindungswesentlichen Auszugs aus dem OSI-Referenzmodell mit der Darstellung der Kommunikationselemente eines Telefonsystems beschrieben.

Eine Telefonanlage 1 ist über ein Übertragungsmedium 3 mit einem Endgerät 2 verbunden. Das Übertragungsmedium kann hierbei als Lichtwellenleiter, Koaxialleiter, Funkübertragung oder ähnliches ausgebildet sein. Innerhalb dieses Übertragungsmediums wird mittels physikalischer Verbindungen, wie beispielsweise einem LAN, einem ISDN-Netz o. ä. eine physikalische Verbindung aufgebaut, die als Bitübertragungsschicht bzw. Physikal Layer 9 beschrieben wird.

Die Kommunikation zwischen der Telefonanlage und dem Endgerät findet in den einzelnen Schichten, wie sie in dem OSI-Referenzmodell dargestellt werden, mittels verschiedener Protokolle 4 statt. So wird in der Transportschicht und der Vermittlungsschicht, die in Fig. 2 mit dem Bezugszeichen 8, 8' zusammengefaßt dargestellt werden, ein Transportprotokoll in Form eines Transmission-Control-Protokolls TCP und ein Vermittlungsprotokoll in Form eines Internet-Protokolls (IP) 8, 8' zur Errichtung, Steuerung und zum Beenden einer Transportverbindung zwischen der Telefonanlage und dem Endgerät 2 sowie zum Aufbau einer Netzverbindung verwendet.

Als Kommunikationssteuerungs-Protokoll zur Kommunikation zwischen der Telefonanlage 1 und dem Endgerät 2 auf der Kommunikationssteuerungsebene wird ein Hypertext-Transport-Protokoll (HTTP) 7, 7' verwendet, welches definiert, wie der Benutzer an dem Endgerät 2 von der Telefonanlage 1 zu übermittelnde Nachrichtendaten anfordert. Eine Übertragung der Nachrichtendaten wird hierbei in der Regel im ASCII-Format durchgeführt. Das heißt, es findet eine Kodierung der zu übertragenden Nachrichtendaten in einen ASCII-Code und eine anschließende Dekodierung im Endgerät 2 statt, wobei ein derartiges Kodieren/Dekodieren aufgrund der Tatsache, daß der ASCII-Code ein zeichenorientierter Code ist, einfacher und schneller im Vergleich zum BinärKodieren/Dekodieren ausgeführt werden. Es ist jedoch auch jede andere Art von zeichenorientiertem Code für die Anwendung auf das erfindungsgemäße Verfahren denkbar, wie beispielsweise EPCDIC.

Auf der Darstellungsebene werden die zu übersendenden Nachrichtendaten von der Telefonanlage 1 zu dem Endgerät 2 über ein Darstellungsprotokoll in Form eines Extensible Markup Language (XML)-Dokuments 6, 6' übertragen. Die auf diese Weise festgelegte gemeinsame Sprache, in der die Nachrichtendaten übertragen werden, ermöglicht das Definieren von Dokumententypen. Genauer gesagt, liefert sie die Regeln, die beim Definieren von Dokumententypen angewendet werden. Dadurch ist es möglich, durch das Festlegen eines bestimmten Dokumententyps dem Benutzer sowohl auf Telefonanlagenseite als auch auf Endgerätseite bestimmte Bedürfnisse zu erfüllen.

Die Dokumententyp-Definition (DTD), die die oben genannten Regeln darstellt, ermöglicht bei entsprechender Programmierung des Protokolls (XML-Dokumente), daß beispielsweise die Anzeige von Nachrichtendaten auf dem Endgerät ein- und ausgeschaltet werden kann. So ist es möglich, den Namen eines Anrufers oder dessen Telefonnummer auf Wunsch sich mittels des Darstellungsprotokolls auf dem Endgerät anzeigen zu lassen oder nicht. Desweiteren ist denkbar, daß der Benutzer an dem Endgerät beispielsweise eine Tabelle in unterschiedlichen Sortierungen anzeigen läßt, wie beispielsweise Anruferadressen einmal nach Namen (alphabetisch) und einmal nach Telefonnummern (numerische Reihenfolge) sortiert.

Dies ist möglich, da mittels DTD solche Veränderungsmöglichkeiten von der Telefonanlage an das Endgerät gleich mitgeliefert werden und nicht erst durch den Endgerätbenutzer von der Telefonanlage neu angefordert werden müssen.

Auf der für den Benutzer des Endgerätes zugänglichen Anwendungsebene 5, 10 wird ein Anwendungsprotokoll zur Kommunikation zwischen der Anwendungsschicht 5 des Endgerätes und der Anwendungsschicht 10 der Telefonanlage verwendet. Dieses Anwendungsprotokoll dient dem Dateitransfer von Nachrichtendaten, der Datenfernausgabe, der Verwaltung auf verschiedenen Endgeräten verteilter Daten etc.

Im folgenden wird nun der Unterschied zwischen einer Meldung im Binärformat gemäß dem Stand der Technik und einer Meldung, wie sie erfindungsgemäß von der Telefonanlage zu dem Endgerät über entsprechende Protokolle gesendet wird, dargestellt. Hierbei stellt die Meldung eine Form von Hin- und Hersenden von Nachrichten innerhalb des Telefonsystems dar. Derartige Nachrichten können dazu dienen, Telefonnummern und Namen des Anrufers/der angerufenen Person darzustellen oder zu unterdrücken, oder eine Verbindung aufzubauen und zu beenden u. ä.

Eine Meldung im Binärformat kann beispielsweise folgendermaßen aussehen: 010100100101111...

Dem gegenüber ist der Aufbau einer Meldung, wie sie durch ein HTTP-Protokoll als XML-Dokument beispielsweise in einem LAN als verbindungslose Nachrichtenübermittlung als Datenpaket mit Ursprungs- und Zieladresse übertragen wird:
<Setup>
<Called Nr.>4711</Called Nr.>
<Calling Nr.>2232</Calling Nr.>
</Setup>

Wie bereits erwähnt, enthalten die Datenpakete dabei Ursprungs- und Zieladresse der Übertragung, weshalb sich ein vorheriger Verbindungsaufbau und ein nachfolgender Verbindungsabbau zur Zielstation, in diesem Fall dem Endgerät, vor und nach der eigentlichen Datenübertragung erübrigt. Dies spart nicht nur Zeit bei der Übertragung der Nachrichtendaten von der Telefonanlage an das Endgerät, sondern erübrigt auch das Vorsehen von Einrichtungen für den Verbindungsaufbau und -abbau und der damit zusammenhängenden Signalisierung.

Ein Kodieren und Dekodieren der Nachrichtendaten in das und aus dem Binärformat mittels komplexer Kodier- und Dekodiereinrichtungen in den Telefonsystemen erübrigt sich ebenso aufgrund des Übertragens der Nachrichtendaten im ASCII-Format.

In Fig. 3 wird eine zweite Ausführungsform der Erfindung gezeigt, worin das Telefonsystem aus einer Telefonanlage und einer Einrichtung zur Administration der Telefonanlage (Administrationstool) 20 zusammensetzt. Das Übertragungsmedium 3 und die Übertragung der Nachrichtendaten mittels eines XML-Dokuments entsprechen Fig. 2.

Auf der Anwendungsebene 21, 10 wird ein Anwendungsprotokoll zwischen der Telefonanlage und dem Administrationstool unter Zuhilfenahme der Dienste aus den darunterliegenden Ebenen, wie dem XML-Protokoll in der Darstellungsebene 6, 6', dem HTT-Protokoll in der Kommunikationssteuerungsebene 7, 7' und den TC/I-Protokollen in der Transportebene/Vermittlungsebene 8, 8' zur Kommunikation der beiden Elemente verwendet. Die Nachrichtendaten werden also als ein XML-Dokument zwischen dem Administrationstool und der Telefonanlage zur Kommunikation derjenigen miteinander hin und her gesendet.

Das Administrationstool übernimmt hierbei die Aufgabe, verschiedene Benutzer an den Endgeräten, welche wiederum an die Telefonanlage angeschlossen sind, mit ihren Namen und deren Telefonnummern in der Telefonanlage einzurichten und verschiedene zusätzliche Einrichtungen vorzunehmen, wie beispielsweise die Möglichkeit ein, daß ein Benutzer aus dem internen Telefonsystemnetz heraus extern telefonieren darf oder nicht.

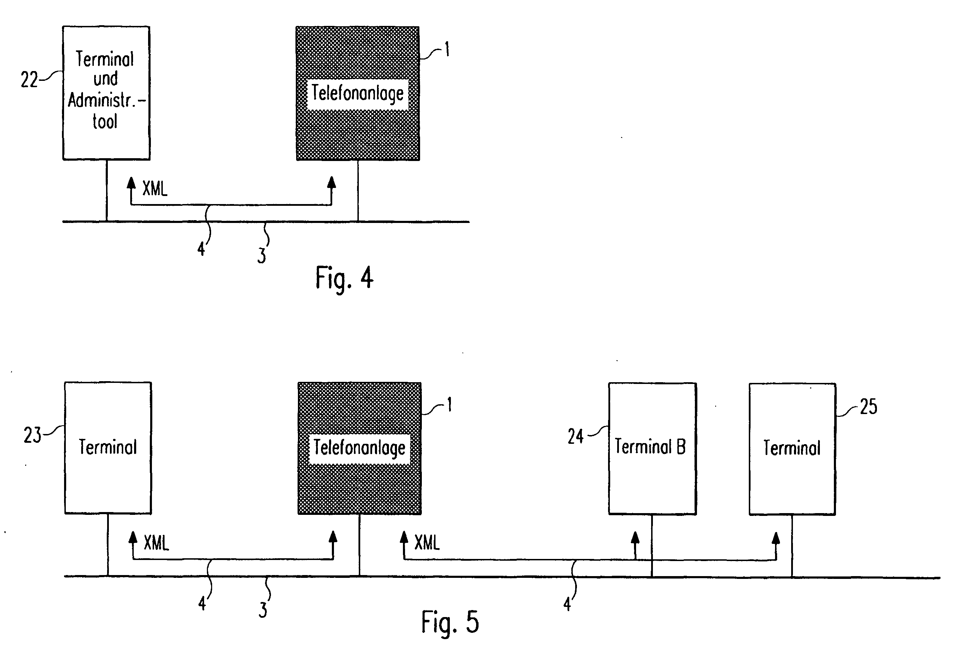

In der dritten Ausführungsform gemäß Fig. 4 können ein Endgerät und das Administrationstool als gemeinsame Einheit 22 mit der Telefonanlage 1 verbunden sein. Daraus ergibt sich der Vorteil, daß der Benutzer eines Endgerätes auch gleichzeitig Administrator des Telefonsystems sein kann und somit dessen Voreinstellungen steuern kann.

In der vierten Ausführungsform gemäß Fig. 5 wird dargestellt, daß ein Endgerät 23 in oben dargestellter Weise mit einer Telefonanlage 1 mittels des XML-Dokuments 4 in Kommunikationsverbindung über das Übertragungsmedium 3 steht. Desweiteren ist eine Kommunikationsverbindung gleicher Art zwischen einem Endgerät 24, Endgerät 25 und der Telefonanlage aufgebaut. Wird nun mittels Computer-Telefon-Integration (CTI) eine Schnittstelle zwischen dem Endgerät 23 und entsprechenden Anwendungsprogrammen über das XML-Dokument gebildet, so kann das Endgerät 23 eine Verbindung zwischen dem Endgerät 24 und dem Endgerät 25 mittels der zwischengeschalteten Telefonanlage 1 aufbauen und dadurch einen gegenseitigen Anruf der Endgeräte 24 und 25 initiieren. Dies hat zur Folge, daß nicht nur eine Zuschaltung zweier Benutzer zu einem bereits bestehenden Telefongespräch mit dem Benutzer des Endgerätes 23 ermöglicht wird, sondern daß auch die Abgabe dieses bereits bestehenden Telefongespräches mit dem Endgerät 23 an die Benutzer der Endgeräte 24 und 25 ermöglicht wird.

Eine Vorrichtung zur Übertragung von Nachrichtendaten innerhalb eines Telefonsystems zwischen einer Telefonanlage und mindestens einem Endgerät und/oder mindestens einer Einrichtung zur Administration der Telefonanlage umfaßt ebenso ein als Übertragungsprotokoll verwendetes HTTP und ein als Darstellungsprotokoll verwendetes XML-Dokument zur Übertragung der Nachrichtendaten von einer Telefonanlage zu einem Endgerät und/oder einer Einrichtung zur Administration der Telefonanlage.

An dieser Stelle sei darauf hingewiesen, daß alle oben beschriebenen Teile für sich alleine gesehen und in jeder Kombination, insbesondere die in den Zeichnungen dargestellten Details als erfindungswesentlich beansprucht werden. Abänderungen hiervon sind dem Fachmann geläufig.

### Bezugszeichenliste

- 1: Telefonanlage
- 2: Endgerät (Terminal)
- 3: Übertragungsmittel
- 4: XML-Dokument
- 5: Anwendungsschicht des Endgerätes
- 6: Darstellungsschicht des Endgerätes/Administrationstools
- 6': Darstellungsschicht der Telefonanlage
- 7: Kommunikationssteuerungsschicht des Endgerätes/Administrationstools
- 7': Kommunikationssteuerungsschicht der Telefonanlage
- 8: Transport-/Vermittlungsschichten des Endgerätes/Administrationstools
- 8': Transport-/Vermittlungsschichten der Telefonanlage
- 9: Bitübertragungsschicht
- 10: Anwendungsschicht der Telefonanlage
- 20: Administrationstool
- 21: Anwendungsschicht des Administrationstools
- 22: Einheit aus Endgerät und Administrationstool
- 23: erstes Endgerät
- 24: zweites Endgerät
- 25: drittes Endgerät

## Patentansprüche

1. Verfahren zur Übertragung von Nachrichtendaten innerhalb eines Telefonsystems zwischen einer Telefonanlage (1) und mindestens einem Endgerät (2) und/oder mindestens einer Einrichtung (20) zur Administration der Telefonanlage (1) mittels eines Übertragungsprotokolls,
**dadurch gekennzeichnet, daß**
als Übertragungsprotokoll ein Kommunikationssteuerungs-Protokoll in Form eines Hypertext-Transport-Protokolls (HTTP) verwendet wird und die Nachrichtendaten mittels eines Darstellungsprotokolls als Extensible Markup Language-Dokument (4; XML) überträgt.

2. Verfahren nach Anspruch 1,
**dadurch gekennzeichnet, daß**
die Nachrichtendaten im ASCII-Format übertragen werden.

3. Verfahren nach Anspruch 1,
**dadurch gekennzeichnet, daß**
die Nachrichtendaten im EPCDIC-Format übertragen werden.

4. Verfahren nach einem der vorangegangenen Ansprüche, insbesondere nach einem der Ansprüche 1 - 3,
**dadurch gekennzeichnet, daß**
zwischen der Telefonanlage (1) und dem mindestens einen Endgerät (2) und/oder der mindestens einen Einrichtung (20) zur Administration zur Übertragung der Nachrichtendaten eine Transportverbindung mittels eines Transportprotokolls in Form eines Transmission-Control-Protokolls errichtet, gesteuert und beendet und eine Netzverbindung mittels eines Vermittlungsprotokolls in Form eines Internet-Protokolls (IP) aufgebaut wird.

5. Verfahren nach einem der vorangegangenen Ansprüche,
**dadurch gekennzeichnet, daß**
das XML-Dokument (4) mittels Dokumententyp-Definitionen (DTD) das Anfordern, Auswählen und Darstellen von übertragenen oder zu übertragenden Nachrichtendaten durch einen Benutzer und/oder Administrator des Telefonsystems durchführt.

6. Verfahren nach einem der vorangegangenen Ansprüche,
**dadurch gekennzeichnet, daß**
die Nachrichtendaten Namen, Telefonnummern und dergleichen Angaben zur Person des Benutzers darstellen.

7. Verfahren nach einem der vorangegangenen Ansprüche,
**dadurch gekennzeichnet, daß**
zur Übertragung der Nachrichtendaten zwischen der Telefonanlage (1) und dem mindestens einen Endgerät (2) und/oder der mindestens einen Einrichtung (20) zur Administration ein lokales Netz verwendet wird.

8. Verfahren nach einem der vorangegangenen Ansprüche, insbesondere nach einem der Ansprüche 1 - 6,
**dadurch gekennzeichnet, daß**
zur Übertragung der Nachrichtendaten zwischen der Telefonanlage (1) und dem mindestens einen Endgerät (2) und/oder der mindestens einen Einrichtung (20) zur Administration ein ISDN-Netz verwendet wird.

9. Verfahren nach einem der vorangegangenen Ansprüche, insbesondere nach einem der Ansprüche 1 - 6,
**dadurch gekennzeichnet, daß**
zur Übertragung der Nachrichtendaten zwischen der Telefonanlage (1) und dem mindestens einen Endgerät (2) und/oder der mindestens einen Einrichtung (20) zur Administration ein ATM-Netz verwendet wird.

10. Verfahren nach einem der vorangegangenen Ansprüche,
**dadurch gekennzeichnet, daß**
vor der Übertragung der Nachrichtendaten kein Verbindungsaufbau bewirkt wird.

11. Telefonsystem mit einer Telefonanlage und mindestens einem Endgerät und/oder mindestens einer Einrichtung zur Administration der Telefonanlage, in dem eine Übertragung von Nachrichtendaten innerhalb eines durch ein Übertragungsprotokoll erfolgt,
**dadurch gekennzeichnet, daß**
das Übertragungsprotokoll ein Kommunikationssteuerungs-Protokoll in Form eines Hypertext-Transport-Protokolls (HTTP) ist und die Nachrichtendaten mittels eines Darstellungsprotokolls als Extensible Markup Language(XML)-Dokument überträgt.

12. Telefonsystem nach Anspruch 11,
**dadurch gekennzeichnet, daß**
das mindestens eine Endgerät und die mindestens eine Einrichtung zur Administration als eine gemeinsame Einrichtung (22) ausgebildet sind.

13. Telefonsystem nach Anspruch 11 oder 12,
**dadurch gekennzeichnet, daß**
das Endgerät (2) als Telefonapparat und/oder PC ausgebildet ist.

14. Telefonsystem nach einem der Ansprüche 11 bis 13,
**dadurch gekennzeichnet, daß**
mittels Computer-Telefon-Integration (CTI) eine Schnittstelle zwischen dem mindestens einen Endgerät (23) und Anwendungsprogrammen gebildet ist, mittels derer Nachrichtendaten zwischen zwei weiteren Endgeräten (24, 25) übertragen werden.
